# NEW EUROPEAN PATENT SPECIFICATION

(11) **EP 0 274 027 B2**
(45) Date of publication and mention of the opposition decision: **21.12.1994**
(45) Mention of the grant of the patent: 02.10.1991
(21) Application number: 87116999.1
(22) Date of filing: 17.11.1987
(51) Int. Cl.: B23C 5/20

(54) **Multiple tooth thread milling apparatus**
Mehrschneidiges Gewindefräsgerät
Travail à plusieurs tranchants à fraiser les filets

(30) Priority: 05.01.1987 US 11176
(43) Date of publication of application: 13.07.1988
(73) Proprietor: VALENITE INC., Troy Michigan 48007-3950 (US)
(72) Inventor: Baker, Brian, Lake Orion, MI 48035 (US)
(74) Representative: Grünecker, Kinkeldey, Stockmair & Schwanhäusser Anwaltssozietät

(56) References cited:
- EP-A- 0 145 167
- DD-A- 143 740
- DD-A- 202 643
- DE-A- 2 151 315
- DE-A- 3 033 626
- DE-A- 3 245 174
- DE-A- 3 623 871
- DE-B- 1 502 076
- FR-A- 2 196 215
- US-A- 4 400 117

## Description

The present invention relates to apparatus for milling threads using replaceable multiple tooth hard insert means. In one embodiment, a plurality of inserts are used, each insert providing one thread cutting tooth.

### Description of the Prior Art

Thread milling is a known method of producing internal and external threads in a work piece. One type of conventional thread milling machine is the universal machine which typically includes a cutter head mounted upon a cross slide for swiveling through an arc of 180 _{°} in order to produce any helix angle of right-hand or left-hand thread. In such apparatus either a single thread milling cutter or a multiple thread milling cutter is provided. Generally, a single thread cutter is used for milling threads having coarse pitches or when the thread length is too great for a multiple thread milling cutter. A single thread cutter includes cutting surfaces which extend radially and are spaced about the periphery of the cutter head to provide a single row of cutting surfaces. During the cutting operation, there is relative movement between the single thread cutter and the work piece for the full length of the thread. A multiple thread milling cutter can be used for milling threads having finer pitches or when the thread length is not too great. A multiple thread cutter includes a series of annular rows of teeth. During the cutting operation, there will usually be 1.10 revolutions of the work spindle relative to the cutter to obtain a full thread form. Single and multiple thread milling cutters are more fully explained in pages 46-40 to 46-45 A.S.T.M.E. Tool Engineer Handbook, Second Edition 1959 From DE-A-3245174 there is known a thread milling apparatus comprising a cutter spindle having two opposed end portions wherein said cutter spindle has a longitudinal axis extending from one end portion to the other end portion. A cutter head is attached to one end of said cutter spindle whereas an electro motor is attached to the opposing end of said cutter spindle.

It is an object of the present invention to provide an apparatus for milling threads wherein it is economical to merely discard replaced cutting surfaces and to provide such an apparatus wherein interchangeable cutting surfaces are provided for cutting threads having different physical characteristics.

The above object is achieved according to the invention by providing an apparatus as indicated in claim 1.

Further improvements and preferred embodiments thereof are indicated in the sub-claims.

### BRIEF DESCRIPTION OF THE DRAWINGS

Figure 6 is a schematic representation of an embodiment of the present invention;
Figure 7 is an end view of the representation of Figure 6;
Figure 8 is a view of the cutter spindle of the embodiment of Figure 6;
Figure 9 is an end view of Figure 8;
Figure 10 is a view of the end plate of the embodiment of Figure 6; and,
Figure 11 is an end view of Figure 10.

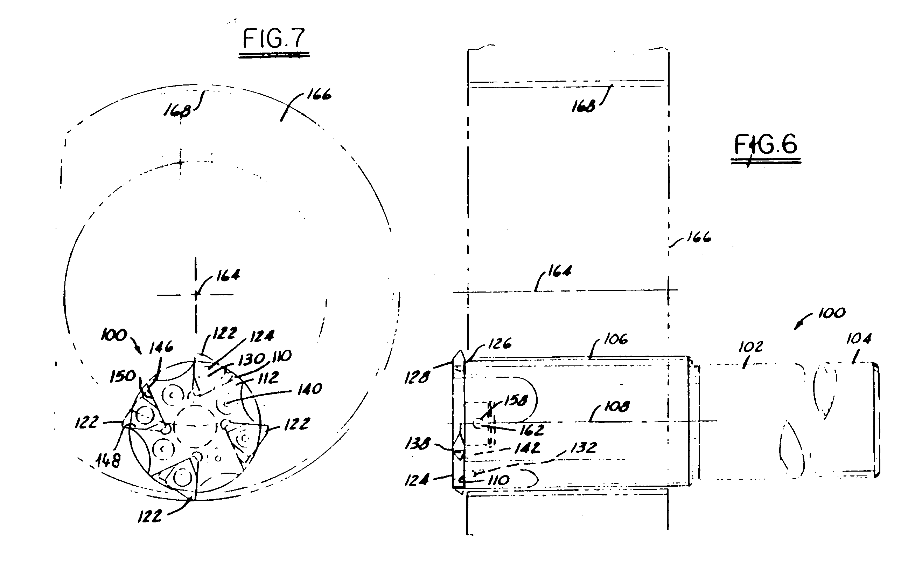

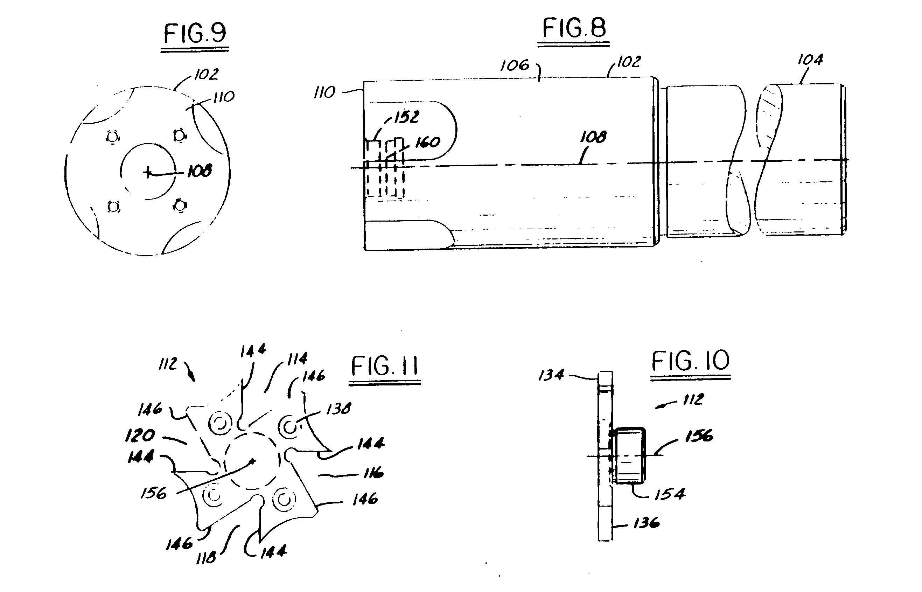

### DESCRIPTION OF THE PREFERRED EMBODIMENT

In the embodiment of Figures 6 to 11 an apparatus 100 for milling threads is provided comprising a cutter spindle 102 having a first end portion 104 and a second end portion 106. Spindle 102 includes a longitudinal axis 108 extending from the first end portion 104 to the second end portion 106. Second end portion 106 includes a face area 110 to which is attached an end plate 112. Face area 110 lies in a plane which is perpendicular to the longitudinal axis 108. End plate 112 also lies in a plane which is perpendicular to the longitudinal axis 108. The end plate includes a plurality of insert pockets, four such pockets 114, 116, 118 and 120 being depicted in Figure 11 although more or less are possible. The insert pockets extend about axis 108 around the periphery of the end plate. A plurality of hard cutting inserts 122 is provided such that there is an insert 122 positioned in each insert pocket. Means coupled to the inserts is provided for holding the inserts in the pockets. For example, in the preferred embodiment each cutting insert includes an aperture 124 extending therethrough from a first insert surface 126 to a second insert surface 128, and a screw 130 extends through aperture 124 into a corresponding threaded aperture 132 which extends into the face area 110. Means coupled to the end plate 112 is provided for securing the end plate to the second end portion 106 of the cutter spindle. For example, in the preferred embodiment the end plate 112 includes an upper surface 134, a lower surface 136, and a plurality of bores 138 extending therethrough from the upper to the lower surface. A plurality of screws 140 is provided, each screw extending through a respective bore 138 into a corresponding threaded bore 142 which extends into face are 110.

The cutting inserts 122 each include a plurality of sides extending from the first surface 126 to the second surface 128, the first surface being parallel to the second surface, and the first surface engaging face area 110. At least one of the sides comprises a cutting portion although as known in the art the insert can have various cutting portions or edges on more than one side. For example, known indexable and reversible hard cutting inserts of tungsten carbide can be used in this embodiment of the present invention.

In the embodiment, the upper surface 134 of the end plate 112 is parallel to the lower surface 136. Each insert pocket 114, 116, 118, 120 is defined by a plurality of insert support side surfaces, two such insert support side surfaces 144 and 146 being depicted for each insert pocket shown in Figure 11, although more insert support side surfaces are possible. Surfaces 144 and 146 extend from upper surface 134 to lower surface 136 and preferably intersect the upper and lower surfaces at an angle equal to 90 °. The lower surface 136 engages the face area 110. For proper insert alignment, preferably at least two sides of each cutting insert engage respective corresponding insert support side surfaces. For example, in the embodiment depicted in Figure 7 sides 148 and 150 of each insert 122 engage respective corresponding insert support side surfaces 144 and 146 of respective insert pockets 114, 116, 118 and 120. In order to assure proper insert alignment in the radial and axial directions so that during the milling operation the plurality of inserts 122 track the thread being cut within the tolerance error of such thread, the insert support side surfaces 144 and 146 and the face area 110 have a tolerance error equal to about one half of the tolerance error of the threads being produced.

It has been noted that the end plate 112 is secured to the cutter spindle by means of screws 140. Such securing means prevents movement of the end plate vis-a-vis the cutter spindle. To further secure the end plate to the cutter spindle the second end portion 106 includes an aperture 152 extending into the cutter spindle from the face area 110 along axis 108. End plate 112 includes a corresponding protuberance 154 extending from lower surface 136 along a central axis 156. The protuberance 154 extends into the aperture 152 and is secured in place by securing means. For example, protuberance 154 includes a bore 158 extending therethrough in a plane perpendicular to axis 156. In a like manner, second end portion 106 has a bore 160 extending therethrough. A pin 162 is press fit into bores 158 and 160 to hold the end plate in place.

In operation, the cutter spindle 102 is attached to a thread milling machine and caused to rotate in a known manner about its axis 108. Simultaneously, the cutter spindle 102 is rotated in accordance with known circular interpolating principles about the axis 164 of the workpiece 166 being threaded internally at 168 in the embodiment of Figures 6 and 7. By providing a single thread form, the total length of the thread being cut is obtained by feeding the workpiece parallel to the axis 108 of the cutter spindle 102 at a feed rate equal to the pitch to be cut. Both internal and external threads can be cut in this manner.

In the embodiment of the present invention the cutting surfaces can be replaced merely by replacing one cutting insert with another and discarding the replaced insert. Inserts having different thread forms can be provided which in effect provides interchangeability of cutting surfaces for cutting threads having different physical characteristics.

The embodiment which has been described herein are but some of several which utilize this invention and are set forth here by way of illustration but not of limitation. It is apparent that many other embodiments which will be readily apparent to those skilled in the art may be made without departing materially from the spirit and scope of the claims.

## Claims

1. Apparatus for milling threads comprising a cutter spindle (102) having a first end portion (104) and a second end portion (106), said cutter spindle having a longitudinal axis (108) extending from said first end portion to said second end portion, characterised in that said second end portion has a face area (110), to which an end plate (112) is attached, said end plate lying in a plane which is perpendicular to said longitudinal axis (108), said end plate having a plurality of insert pockets (114-120) extending about said axis spaced around the periphery of said end plate, a plurality of cutting inserts (122), wherein each cutting insert of said plurality of cutting inserts is positioned in an insert pocket of said plurality of insert pockets; means (130) coupled to said cutting inserts for holding said cutting inserts in said pockets, and means (152) coupled to said end plate for securing said end plate to said second end portion of said cutter spindle.

2. Apparatus of claim 1 wherein said face area (110) lies in a plane which is perpendicular to said longitudinal axis (108), and wherein said cutting inserts (122) each include a first surface (126) and a second surface (128) and a plurality of sides extending from said first surface to said second surface, at least one of said sides comprising a cutting portion of said cutting insert, said first surface being parallel to said second surface and said first surface engaging said face area.

3. Apparatus of claim 2 wherein each cutting insert (122) includes an aperture (124) extending therethrough from said first surface (126) to said second surface (128), and wherein said holding means includes a screw (130) extending through said aperture into a corresponding threaded aperture (132) which extends into said face area (110).

4. Apparatus of claim 3 wherein said end plate (112) includes an upper surface (134) and a lower surface (136), said upper surface being parallel to said lower surface, each insert pocket (114-120) being defined by a plurality of insert support side surfaces (144, 146) which extend from said upper surface to said lower surface, said lower surface engaging said face area (110), and at least two of said sides (148, 150) of said cutting inserts engaging respective corresponding of at least two of said insert support side surfaces.

5. Apparatus of claim 4 wherein said second end portion (106) of said cutter spindle (102) includes an aperture (152) extending into said cutter spindle from said face area (110) along said longitudinal axis (108), and said end plate (112) includes a corresponding protuberance (154) extending from said lower surface (136) along a central axis of said end plate, said protuberance extending into said aperture, and further including means (162) for securing said protuberance to said second end portion.

6. Apparatus of claim 5 wherein said end plate (112) includes a plurality of bores (138) extending therethrough from said upper surface (134) to said lower surface (136), and wherein said securing means includes a plurality of screws (140) each of which extend through a respective bore (138) of said plurality of bores into a corresponding threaded bore (142) which extends into said face area (110).

7. Apparatus of claim 6 wherein said protuberance (154) includes a first bore (158) extending therethrough in a plane perpendicular to said axis (156) and said second end portion (106) of said cutter spindle (102) has a second bore (160) extending through said second end portion, and further including a pin (162) which is press fit into said first bore and said second bore.

8. Apparatus of claim 4 wherein said insert support side surfaces (144, 146) and said face area (110) have a tolerance error equal to about one half of the tolerance error of said threads being produced.

9. Apparatus of claim 1 wherein said plurality of insert pockets (114-120) is spaced about said longitudinal axis (108, 156) around the periphery of said end plate (112).

10. Apparatus of claim 8 wherein said insert support side surfaces (144, 146) intersect said upper surface (134) of the end plate (112) at an angle equal to 90 and said lower surface (136) of the end plate at an angle equal to 90_{°}.

## Patentansprüche

1. Vorrichtung zum Fräsen von Gewinden mit einer Frässpindel (102), welche einen ersten Endbereich (104) und einen zweiten Endbereich (106) aufweist, und wobei die Frässpindel eine sich von dem ersten Endbereich zu dem zweiten Endbereich erstreckende Längsachse (108) aufweist,
dadurch gekennzeichnet,
daß der zweite Endbereich eine Frontfläche (110) aufweist, an welcher eine Abschlußplatte (112) angebracht ist, wobei die Abschlußplatte in einer zu der Längsachse (108) senkrechten Ebene liegt, und die Abschlußplatte eine Vielzahl von sich um die Achse erstreckenden in Umfangsrichtung der Abschlußplatte (112) in Abstand voneinander angeordneten Einsatzaufnahmen (114 - 120) und eine Vielzahl von Schneideinsätzen (122) aufweist, wobei jeder Schneideinsatz der Vielzahl von Schneideinsätzen in einer Einsatzaufnahme der Vielzahl von Einsatzaufnahmen positioniert ist; und daß Einrichtungen (130) zur Halterung der Schneideinsätze in den Einsatzaufnahmen mit den Schneideinsätzen verbunden, und Einrichtungen (152) zur Befestigung der Abschlußplatte an dem zweiten Endbereich der Frässpindel mit der Abschlußplatte verbunden sind.

2. Vorrichtung nach Anspruch 1, in welcher die Frontfläche (110) in einer zu der Längsachse (108) senkrechten Ebene liegt, und in welcher jede der Schneideinsätze (122) eine erste Oberfläche (126) und eine zweite Oberfläche (128) und eine Vielzahl sich von der ersten Oberfläche zur zweiten Oberfläche erstreckenden Seiten einschließt, wobei wenigstens eine der Seiten einen Schneidbereich des Schneideinsatzes umfaßt, die erste Oberfläche zur zweiten Oberfläche parallel ist und die erste Oberfläche mit der Frontfläche in Eingriff steht.

3. Vorrichtung nach Anspruch 2, in welcher jeder Schneideinsatz (122) eine sich von der ersten Oberfläche (126) zu der zweiten Oberfläche (128) hindurcherstreckende Öffnung (124) aufweist, und in welcher die Halteeinrichtungen eine Schraube (130) einschließen, welche sich durch die Öffnung in eine entsprechende mit einem Gewinde versehene Öffnung (132) erstreckt, wobei sich die mit dem Gewinde versehene Öffnung in die Frontfläche hinein erstreckt.

4. Vorrichtung nach Anspruch 3, in welcher die Abschlußplatte (112) eine obere Fläche (134) und eine untere Fläche (136) einschließt, wobei die untere Fläche parallel zu der oberen Fläche ist, und die Einsatzaufnahmen (114 - 120) durch eine Vielzahl von sich von der oberen Fläche zu der unteren Fläche erstreckenden den Einsatz halternden Seitenflächen (144, 146) bestimmt werden, die untere Fläche mit der Frontfläche (110) im Eingriff steht und wenigstens zwei der Seiten (148, 150) der Schneideinsätze mit wenigstens zwei der jeweils entsprechenden den Einsatz halternden Seitenflächen im Eingriff stehen.

5. Vorrichtung nach Anspruch 4, in welcher der zweite Endbereich (106) der Frässpindel (102) eine sich durch die Frässpindel von der Frontfläche (110) entlang der Längsachse (108) erstreckende Öffnung einschließt, die Anschlußplatte (112) einen entsprechenden sich von der unteren Fläche (136) entlang einer zentralen Achse der Abschlußplatte erstreckenden Vorsprung aufweist, wobei sich der Vorsprung in die Öffnung erstreckt, und außerdem Einrichtungen (162) zur Befestigung des Vorsprungs in dem zweiten Endbereich vorgesehen sind.

6. Vorrichtung nach Anspruch 5, in welcher die Abschlußplatte (112) eine Vielzahl von sich von der oberen Fläche (134) zu der unteren Fläche (136) hindurcherstreckende Bohrungen (138) einschließt, und in welcher die Befestigungseinrichrichtungen eine Vielzahl von Schrauben (140) aufweist, von denen sich jede durch eine jeweilige Bohrung (138) der Vielzahl von Bohrungen in eine entsprechende sich in die Frontfläche (110) hineinerstreckende Gewindebohrung (142) erstreckt.

7. Vorrichtung nach Anspruch 6, in welcher der Vorsprung (154) eine erste Bohrung (158) einschließt, welche sich durch diesen in einer zu der Achse (156) senkrechten Ebene erstreckt, und der zweite Endbereich (106) der Frässpindel (102) eine sich durch den zweiten Endbereich erstreckende zweite Bohrung (160) aufweist, und des weiteren einen Stift (162) einschließt, welcher in die erste Bohrung und die zweite Bohrung eingepreßt wird.

8. Vorrichtung nach Anspruch 4, in welcher die den Einsatz halternden Seitenflächen (144, 146) und die Frontfläche (110) eine Toleranz aufweisen, welche der Hälfte der Toleranz der herzustellenden Gewinde entspricht.

9. Vorrichtung nach Anspruch 1, in welcher die Vielzahl von Einsatzaufnahmen (114 - 120) um die Längsachse (108, 156) in Umfangsrichtung der Abschlußplatte (112) in Abstand voneinander sind.

10. Vorrichtung nach Anspruch 8, in welcher die den Einsatz halternden Seitenflächen (144, 146) die obere Fläche (134) der Abschlußplatte (112) unter einem Winkel von 90 und die untere Fläche (136) der Abschlußplatte unter einem Win- kel von 90 _{°} schneidet.

## Revendications

1. Appareil à fraiser des filets comprenant un arbre de coupe (102) comportant une première extrémité (104) et une seconde extrémité (106), le dit arbre de coupe présentant un axe longitudinal (108) s'étendant de la dite première extrémité à la dite seconde extrémité, caractérisé en ce que la dite seconde extrémité présente une zone frontale (110), à laquelle une plaque d'extrémité (112) est fixée, la dite plaque d'extrémité étant dans un plan perpendiculaire au dit axe longitudinal (108) et ayant une pluralité de retraits (114-120) pour recevoir des inserts s'étendant par rapport au dit axe de façon espacée sur la périphérie de la dite plaque d'extrémité, une pluralité d'inserts de coupe (122), dans lequel chaque insert de coupe de la dite pluralité d'inserts de coupe est logé dans un retrait pour recevoir des inserts de la dite pluralité de retraits pour recevoir des inserts; un moyen (130) couplé aux dits inserts de coupe pour porter les dits inserts de coupe dans les dits retraits, et un moyen (152) couplé à la dite plaque d'extrémité pour verrouiller la dite plaque d'extrémité à la dite seconde partie d'extrémité du dit arbre de coupe.

2. Appareil selon la revendication 1 dans lequel la dite zone frontale (110) est dans un plan perpendiculaire au dit axe longitudinal (108), et dans lequel les dits inserts de coupe (122) comporte chacun une première surface (126) et une deuxième surface (128) et une pluralité de côtés s'étendant de la dite première surface à la dite deuxième surface, au moins un des dits côtés comprenant une partie coupante du dit insert de coupe, la dite première surface étant parallèle à la dite deuxième surface et la dite première surface étant au contact de la dite zone frontale.

3. Appareil selon la revendication 2 dans lequel chaque insert de coupe (122) comporte une ouverture (124) le traversant de la dite première surface (126) à la dite deuxième surface (128), et dans lequel le dit moyen de maintien comporte une vis (130) s'étendant à travers de la dite ouverture dans une ouverture taraudée correspondante (132) pratiquée dans la dite zone frontale (110).

4. Appareil selon la revendication 3 dans lequel la dite plaque d'extrémité (112) comporte une surface supérieure (134) et une surface inférieure (136), la dite surface supérieure étant parallèle à la dite surface inférieure, chaque retrait (114-120) pour recevoir des inserts étant défini par une pluralité de surfaces latérales (144, 146) formant support d'insert, qui s'étendent de la dite surface supérieure à la dite surface inférieure, la dite surface inférieure étant au contact de la dite zone frontale (110), et au moins deux des dits côtés (148, 150) des dits inserts de coupe étant respectivement en contact correspondant d'au moins deux des dites surfaces latérales formant support d'insert.

5. Appareil selon la revendication 4 dans lequel la dite seconde partie d'extrémité (106) du dit arbre de coupe (102) comporte une ouverture (152) s'étendant à l'intérieur du dit arbre de coupe à partir de la dite zone frontale (110) dans le dit axe longitudinal (108), et la dite plaque d'extrémité (112) comporte une protubérance correspondante (154) faisant saillie de la dite surface inférieure (136) dans un axe central de la dite plaque d'extrémité, la dite protubérance faisant saillie dans la dite ouverture, et comprenant, en outre, un moyen (162) de verrouillage des dites protubérances à la dite seconde partie d'extrémité.

6. Appareil selon la revendication 5 dans lequel la dite plaque d'extrémité (112) comporte une pluralité d'alésages (138) la traversant de la dite surface supérieure (134) à la dite surface inférieure (136), et dans lequel le dit moyen de verrouillage comprend une pluralité de vis (140) pénétrant chacune à travers un alésage respectif de la dite pluralité d'alésages dans un trou taraudé (142) pratiqué dans la dite zone frontale (110).

7. Appareil selon la revendication 6 dans lequel la dite protubérance (154) est percée d'un premier alésage (158) s'étendant dans un plan perpendiculaire au dit axe (156) et la dite seconde partie d'extrémité (106) du dit arbre de coupe (102) présente un deuxième alésage (160) traversant la dite seconde partie d'extrémité, et comprenant, en outre, un pion (162) qui est mis à force dans les dits premier et deuxième alésages.

8. Appareil selon la revendication 4 dans lequel les dites surfaces latérales (144, 146) formant support d'insert et la dite zone frontale (110) présentent une tolérance égale à environ la moitié de celle des dits filets obtenus.

9. Appareil selon la revendication 1 dans lequel la dite pluralité de retraits (114-120) pour recevoir des inserts est espacée par rapport au dit axe longitudinal (108, 156) sur la périphérie de la dite plaque d'extrémité (112).

10. Appareil selon la revendication 8 dans lequel les dites surfaces latérales (144, 146) formant support d'insert coupent la dite surface supérieure (134) de la dite plaque d'extrémité (112) selon un angle droit et la dite surface inférieure (136) de la dite plaque d'extrémité selon un angle droit.
